# EUROPEAN PATENT SPECIFICATION

(11) **EP 4 458 544 B1**
(45) Date of publication and mention of the grant of the patent: **10.12.2025**
(21) Application number: 23171455.1
(22) Date of filing: 04.05.2023
(51) Int. Cl.: B29C 33/30, B29C 41/38

(54) **A METHOD AND APPARATUS FOR MANUFACTURING PROTECTIVE LINERS FOR STRUCTURAL PROFILE PARTS OF AIRCRAFT**
VERFAHREN UND VORRICHTUNG ZUR HERSTELLUNG VON SCHUTZAUSKLEIDUNGEN FÜR STRUKTURPROFILTEILE EINES FLUGZEUGS
PROCÉDÉ ET APPAREIL DE FABRICATION DE REVÊTEMENTS DE PROTECTION POUR DES PIÈCES DE PROFIL STRUCTUREL D'AÉRONEF

(43) Date of publication of application: 06.11.2024
(73) Proprietor: Airbus Operations GmbH, 21129 Hamburg (DE)
(72) Inventor: Engelskirchen, Mathias Keanu, 21129 Hamburg (DE)
(74) Representative: KASTEL Patentanwälte PartG mbB

(56) References cited:
- EP-A1- 2 176 123
- WO-A1-2014/184692
- GB-A- 2 588 967
- US-A- 2 166 798

## Description

The invention relates to a method and apparatus for manufacturing protective liners.

EP 3 205 470 A1 discloses the manufacture of parts made of thermoplastic material, where injection means are used to inject the thermoplastic material, e.g., polyamide.

EP 1 860 250 A2 discloses a seal for a facade system.

EP 2 839 946 A2 discloses a transfer system and a method for applying a film material to an elongate member.

EP 2 176 123 A1 discloses a composite laminate structure having an edge and an impact indicator which is carried by the edge.

US 2017 / 0 152 949 A1 discloses a sealant containment assembly where at least a portion of a fastener pattern is bound between at least two components, such as components used to form a portion of an aircraft. The sealant containment assembly includes at least one sealant containment member that sealingly engages peripheral portions of the components. The sealant containment member forms a sealing chamber around at least a portion of the fastener pattern. Fluid sealant flows into the sealing chamber and cures to seal fasteners within the fastener pattern that connect the components together.

GB 2 588 967 A discloses an aircraft structure, e.g. a stringer, rib, spar or rib attachment, that has a composite laminate body. The body has an edge and an edge cap covering the edge, wherein cured resin forming part of the body bonds the edge cap on the edge. The aircraft structure is manufactured by providing a dry fibre preform of a structural component, covering an edge of the preform with an edge cap, feeding or injecting uncured resin between the edge cap device and the edge of the preform to infuse the dry fibre preform and curing the resin.

DE 10 2014 017 411 A1 discloses a method for manufacturing a fiber composite part. A thermoplastic or elastomeric edge protection is attached to an edge of the fiber composite before the matrix of the fiber composite component is cured. After attaching the edge protection, the matrix of the fiber composite component is cured.

Unpublished European patent application 22 163 382.9 discloses a method for manufacturing a protective lining for aircraft parts. As an example, a tank wall liner can be manufactured in-situ by casting the sealant into a prepared mold that is formed at least at the bottom side by the part to be protected by the tank wall liner. Specifically, for fuel tanks, the bottom portion forms the bottom side of the mold, whereas the ribs and stringers form a circumferential wall of the mold that prevents flowing of the potting sealant compound into neighboring molds.

It is the object of the invention to improve the manufacture of protective liners.

The object is achieved by the subject-matter of the independent claims. Preferred embodiments are subject-matter of the dependent claims.

The invention provides a method for manufacturing protective liners for structural profile parts of a fuselage of an aircraft, the method comprising:
a) preparing a plurality of base molds, wherein each base mold includes a molding feature that matches a portion to be protected of a structural profile part;
b) arranging the base molds such that their molding features cooperatively form a continuous molding feature from a first base mold to a last base mold;
c) applying an uncured wet sealant to the continuous molding feature;
d) curing the wet sealant into a cured sealant member within the base mold; and
e) releasing the cured sealant member from the base mold.

Preferably, the base molds are negative base molds. Preferably, each negative base mold includes a molding groove as the molding feature.

Preferably, in step c) a complementary mold member that cooperatively forms a molding cavity with the base mold is applied to the uncured wet sealant in order to generate a profile that matches the portion to be protected. Preferably, the complementary mold member is a positive mold member.

Preferably, in step c) the uncured wet sealant is applied by moving a sealant applicator and the base molds relative to each other and injecting the uncured sealant into the continuous molding feature.

Preferably, the sealant applicator includes a nozzle member that is profiled so as to act as the complementary mold member and the matching profile is generated by moving the nozzle member and the base molds relative to each other while simultaneously applying the uncured wet sealant.

Preferably, the sealant applicator is stationary and the base molds are moving.

Preferably, in step d) the curing is accelerated by curing the uncured wet sealant in a curing oven or autoclave.

Preferably, in step d) at least one base mold is separated from its neighboring base mold in order to limit the length of the cured sealant member, preferably before inserting the separated base mold into the curing oven or autoclave.

Preferably, the method is performed in a continuous manner by performing the steps b) to e) in a cycle, whereby the respective base mold emptied in step e) is arranged to form the continuous molding feature in step b).

The invention provides a method for manufacturing a protected structural profile part of a fuselage of an aircraft by performing the previously described method in order to obtain at least one cured sealant member and by attaching the cured sealant member to a structural profile part so as to form a protective liner and generate the protected structural profile part. Preferably, the cured sealant member is attached by applying uncured wet sealant and letting it cure.

The invention provides a manufacturing apparatus configured for performing a previously described method according to any of the preceding claims, the apparatus comprising:
- a plurality of base molds, wherein each base mold includes a molding feature that matches a portion to be protected of a structural profile part;
- a sealant application mechanism that is configured for arranging the base molds such that their molding features cooperatively form a continuous molding feature from a first base mold to a last base mold and for applying an uncured wet sealant to the continuous molding feature;
- a curing apparatus that is configured for curing the wet sealant into a cured sealant member within the base mold; and
- a releasing mechanism configured for releasing the cured sealant member from the base mold.

Preferably, the sealant application mechanism comprises a complementary mold member that configured to be applied to the uncured wet sealant in order to generate a profile that matches the portion to be protected.

Preferably, the sealant application mechanism comprises a sealant applicator that is configured for injecting the uncured sealant into the continuous molding feature, wherein the sealant applicator and the base molds are movable relative to each other.

Preferably, wherein the sealant applicator includes a nozzle member that is profiled so as to act as the complementary mold member and configured for generating the matching profile by moving the nozzle member and the base molds relative to each other while simultaneously applying the uncured wet sealant. Preferably, the sealant applicator is stationary and the base molds are movable.

Preferably, the apparatus further comprises a curing oven or autoclave configured for curing the uncured wet sealant.

Preferably, the apparatus further comprises an automatic or manual transport device that is configured for transporting the base molds between different stations of the apparatus.

Preferably, the apparatus further comprises a second sealant applicator that is configured for applying uncured wet sealant so as to attach the cured sealant member to the structural profile part as a protective liner.

Preferably, the automatic transport device is configured to automatically separate at least one base mold from its neighboring base mold in order to limit the length of the cured sealant member, preferably before transporting and inserting the separated base mold into the curing oven or autoclave.

Preferably, the automatic transport device is configured so as to allow performance of the steps b) to e) in a cycle, whereby the respective base mold emptied in step e) is arranged to form the continuous molding feature in step b), in order to perform the manufacturing method in a continuous manner.

The general idea is to use a machine and process for producing profiles from self-curing sealants, e.g. polysulfide materials. Such profiles can be used for aerospace applications (e.g. edge protection, surface protection, abrasion protection, cabin, flow blockers), and window seals (e.g. buildings, automotive, aerospace, maritime).

Common processes include extrusion and pultrusion as standard in plastic profile production. For sealants (polysulfide or similar substances), the idea is to dispense them onto a base. This can be done using a specially shaped nozzle. While it is possible to carry out this step manually, an automatic version is preferred. The nozzle can be fed by a bulk-mixer or material reservoir. The base or the nozzle are moved relative to each other in order to create the profile. The sealant thereby stays in place as it is typically of pasty consistency.

The base can be treated with a release agent before applying the sealant or made from a non-stick material such as PTFE. The base with the uncured sealant is optionally transferred into a curing oven or autoclave (optionally with increased humidity) to accelerate the curing process. The oven can be a tunnel oven to create infinitely long profiles. It is also possible to split the base into discrete pieces which are transferred into the curing oven or autoclave (manually or automatically). For better handling, the bases with the uncured profiles may be put onto a cart or rack and be transferred to the curing oven.

After curing is completed the profiles are removed from the oven and after cooling from the base. The base can be reused after cleaning.

A continuous process can be realised by matching the oven speed, extrusion speed and amount of base parts, so that the bases are directly transfered to the beginning of the process directly after use.

To create different profile length without cutting it is optionally possible to stop the material feed to the nozzle and continuing the movement of the nozzle/base before restarting the sealant flow.

Thus, slowly curing materials, e.g. self-curing sealants can be used in a continuous and partially or even fully automated process. The profiles can be made in high quantities at lower cost compared to conventional approaches. The process can be automated more easily than when using molds.

Embodiments of the invention are described in more detail with reference to the accompanying schematic drawings that are listed below.
Fig. 1 depicts an embodiment of a method for manufacturing a protected structural profile part;
Fig. 2 depicts a cross-section along line II-II in Fig. 1;
Fig. 3 depicts a variant of the cross-section of Fig. 2;
Fig. 4 depicts a cross-section along line IV-IV in Fig. 1; and
Fig. 5 and Fig. 6 depict variants of the cross-section of Fig. 4.

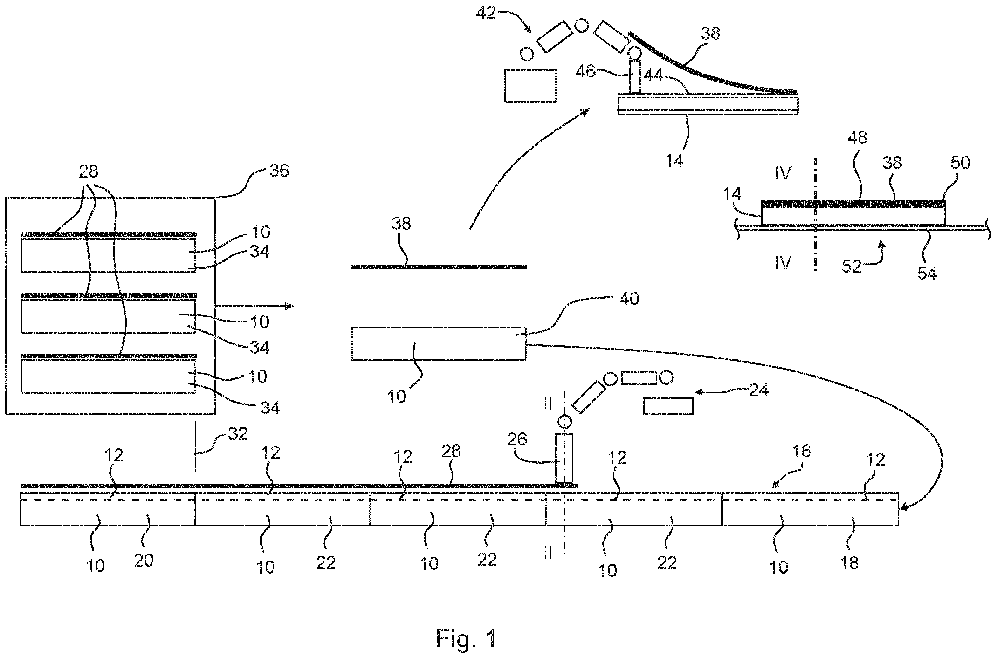

As illustrated in Fig. 1 a plurality of base molds 10 is arranged such that they are adjacent to each other. The base mold 10 is generally shaped such that a two or more of them are capable of forming a larger mold. The base mold 10 may be a negative base mold.

Each base mold 10 includes a molding feature 12. The molding feature 12 has a cross-section that matches a portion of a structural profile part 14 that is to be protected. There may be different types of base molds 10 for different types of structural profile parts 14. It is also possible that each base mold 10 includes different types of molding features 12 so as to be able to manufacture different types of protective liner. The molding feature 12 is preferably a molding groove.

The structural profile part 14 is preferably an elongated member that extends along a longitudinal direction and has a preferably constant cross-section. Examples for the structural profile part 14 are stringers, frames and reinforcement members that can be installed or form part of an aircraft fuselage.

The base molds 10 are arranged such that the individual molding features 12 form a continuous molding feature 16. The continuous molding feature 16 may continuously extend from a first base mold 18 to a last base mold 20. It is possible that one or more intermediate base molds 22 are arranged between the first and last base mold 18, 20 such that their respective molding features 12 are part of the continuous molding feature 16.

A first sealant application mechanism 24 is provided. The first sealant application mechanism 24 includes a sealant applicator 26. The sealant applicator 26 is configured to be movable relative to the continuous molding feature 16. This may be achieved by moving the sealant applicator 26 and/or the base molds 18. For example, the sealant applicator 26 can be part of a robotic arm or other mechanism that allows movement of the sealant applicator 26. Additionally or alternatively it is possible that the base molds 18 are moved by a type of roller or other conveyor mechanism.

Uncured wet sealant 28 is applied to the continuous molding feature 16 by the sealant applicator 26. Suitable wet sealants 28 are known in the art and may be of the self-curing type. Examples are polysulfide based sealants or epoxy resins. Preferably, the base mold 18 is made of or includes a material that does not stick to the type of sealant that is used. Alternatively or additionally it is possible to prepare the base mold 18 with a release agent that aids in removing cured sealant of the used type.

The uncured wet sealant 28 can be formed into its near-final shape by a complementary mold member 30. The complementary mold member 30 preferably only extends along a small part of the molding feature 12. The complementary mold member 30 is moved relative to the uncured wet sealant 28 along the continuous molding feature 16 and preferably removes excess uncured sealant such that, when viewed in a cross-section, the uncured wet sealant 28 matches the portion to be protected on the structural profile part 14. The complementary molde member 30 in cooperation with the base mold 10 forms a molding cavity that has the desired cross-section to match the portion to be protected of the structural profile part 14.

In a preferred embodiment, the sealant applicator 26 is shaped as the complementary mold member 30. In other words, the sealant applicator 26 can simultaneously apply the uncured wet sealant 28 and give it its near-final shape by moving the sealant applicator 26 relative to the continuous molding feature 16 and simultaneously applying the uncured wet sealant 28 thereto.

After receiving the uncured wet sealant 28, at least one of the base molds 18 can be separated. This can be done by increasing the speed of the respective base mold 18 relative to the other base molds 18 using, for example, the conveyor mechanism.

A separator 32 can be inserted between two base molds 18 to be separated in order to allow for a clean separation without pulling the uncured wet sealant 28.

The separated base molds 34 can processed in a curing apparatus 36, which may be a curing oven or autoclave. It is generally possible to let the self curing type of wet sealant self cure, however, it is preferred to actively support curing with the curing apparatus 36 in order to increase manufacturing capacity.

After curing the previously uncured wet sealant 28 forms a cured sealant member 38. The cured sealant member 38 has a cross-section that is generally shaped such that it can be attached to the portion to be protected of the structural profile part 14.

The cured sealant member 38 is removed from the base mold 18. The empty base mold 40 is returned to the arrangement of base molds 18 and can be used for another production cycle.

The cured sealant member 38 can be further processed so as to fit the cured sealant member 38 to the structural profile part 14, specifically to the portion the cured sealant member 38 is to be installed on.

A second sealant application mechanism 42 is used to apply uncured self-curing wet sealant 44 to the portion to be protected of the structural profile part 14. The second sealant application mechanism 42 may be a manually operated device or an automated robotic device. The second sealant application mechanism 42 may include a second sealant applicator 46 that can be shaped to match the portion on which the cured sealant member 38 is to be installed, in order to avoid excess wet sealant on portions of the structural profile part 14 that should not be affected by the process.

After the uncured self-curing sealant 44 was applied to the portion to be protected, the cured sealant member 38 is attached to the structural profile part 14. The uncured self-curing sealant 44 cures and bonds the cured sealant member 38 to the portion to be protected on the structural profile part 14 thereby forming a protective liner 48. The combination of the structural profile part 14 and the protective liner 48 forms a protected structural profile part 50 that can be part of an aircraft fuselage 52 by being attached to a skin 54.

It should be noted that the protected structural profile part 50 can be formed in-situ, i.e. when already attached to the skin 54 or before the fuselage 52 is assembled.

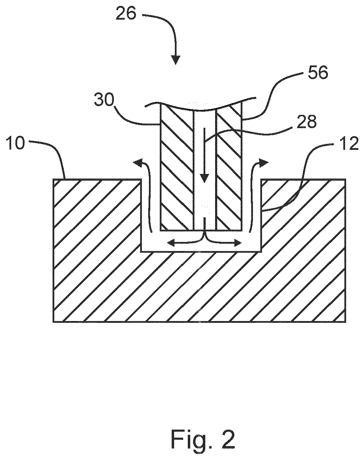

Referring to Fig. 2, a cross-section along the line II-II in Fig. 1 is explained in more detail. As depicted in Fig. 2, the base mold 10 includes the molding feature 12. The molding feature 12 includes parallel sidewalls and a groove bottom so as to form a recess from a surface of the base mold 10. The sealant applicator 26 is inserted into the molding feature 12 and the uncured wet sealant 28 gets discharged through a nozzle member 56 into the molding feature 12. Preferably, the uncured wet sealant 28 is discharged onto the groove bottom and flows along there towards the parallel sidewalls and rises up towards the surface of the base mold 10.

The sealant applicator 26 simultaneously acts as the complementary mold member 30 and, preferably due to the relative movement between the complementary mold member 30 and the base mold 10, can shape the uncured wet sealant 28 to match the portion to be protected of the structural profile part 14, e.g. into a U-shape.

Since excess of uncured wet sealant 28 may be flowing from the molding feature 12 between the positive molde member 30 and the parallel sidewalls onto the surface, the excess may be removed before or after curing.

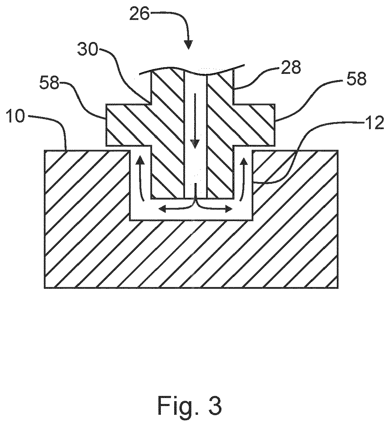

Referring to Fig. 3, a variant of the cross-section is depicted where the complementary mold member 30 includes a cover portion 58 that prevents excess uncured wet sealant 28 from exiting the molding feature 12.

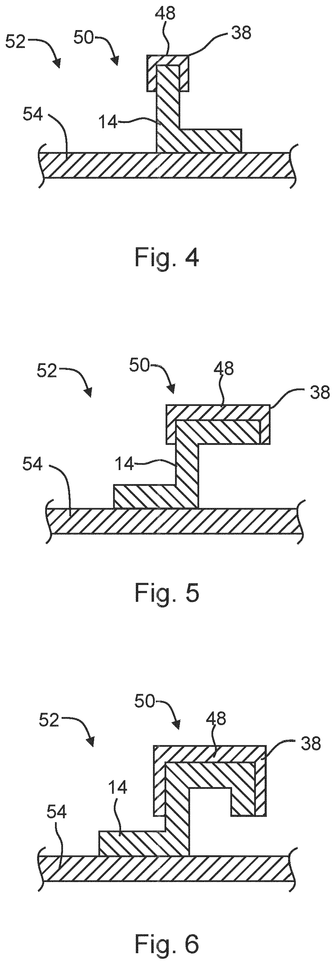

Referring to Fig. 4, a cross-section along line IV-IV in Fig. 1 is depicted. The structural profile part 14 is fixed to the skin 54 and they cooperatively form part of the fuselage 52. The cured sealant member 38 is attached to a thin edge portion of the structural profile part 14 such that it is a protected structural profile part 50.

Referring to Fig. 5 and Fig. 6 variants of the cross-section along line IV-IV are depicted. In order to cover the differently shaped portions of the structural profile part 14, the molding feature 12 can be preferably adapted in width and depth.

In any case, it is preferred that the molding feature 12 and the complementary mold member 30 substantially form a U-shape when they are arranged for application of the uncured wet sealant 28 and viewed in a cross-section.

In order to improve the manufacture of protected structural profile parts (50), particularly for mass-fabrication for a fuselage (52) of an aircraft, a quasi-continuous process is proposed. A plurality of base molds (10) are prepared by forming molding features (12) that match a portion to be protected of the structural profile part (14). The base molds (10) are arranged such that their molding features (12) cooperatively form a continuous molding feature (16). A sealant applicator (26) is used to apply an uncured wet sealant (28) to the groove, wherein the sealant applicator (26) also acts as a complementary mold member (30) in order to give the uncured wet sealant (28) the desired shape. The wet sealant is cured and forms a cured sealant member (38), which is released from the base mold (10) and fixed to the structural profile part (14) as a protective liner (48), thereby generating the desired protected structural profile part (50).

### List of reference signs:

- 10: base mold
- 12: molding feature
- 14: structural profile part
- 16: continuous molding feature
- 18: first base mold
- 20: last base mold
- 22: intermediate base mold
- 24: first sealant application mechanism
- 26: sealant applicator
- 28: uncured wet sealant
- 30: complementary mold member
- 32: separator
- 34: separated base mold
- 36: curing apparatus
- 38: cured sealant member
- 40: empty base mold
- 42: second sealant application mechanism
- 44: uncured self-curing wet sealant
- 46: second sealant applicator
- 48: protective liner
- 50: protected structural profile part
- 52: fuselage
- 54: skin
- 56: nozzle member
- 58: cover portion

## Claims

1. A method for manufacturing protective liners (48) for structural profile parts (14) of a fuselage (52) of an aircraft, the method comprising:
a) preparing a plurality of base molds (10), wherein each base mold (10) includes a molding feature (12) that matches a portion to be protected of an structural profile part (14);
b) arranging the base molds (10) such that their molding features (12) cooperatively form a continuous molding feature (16) from a first base mold (18) to a last base mold (20);
c) applying an uncured wet sealant (28) to the continuous molding feature (16);
d) curing the uncured wet sealant (28) into a cured sealant member (38) within the base mold (10); and
e) releasing the cured sealant member (38) from the base mold (10).

2. The method according to claim 1, wherein in step c) a complementary mold member (30) that cooperatively forms a molding cavity with the base mold (10) is applied to the uncured wet sealant (28) in order to generate a profile that matches the portion to be protected.

3. The method according to any of the preceding claims, wherein in step c) the uncured wet sealant (28) is applied by moving a sealant applicator (26) and the base molds (10) relative to each other and injecting the uncured wet sealant (28) into the continuous molding feature (16).

4. The method according to claim 2 and 3, wherein the sealant applicator (26) includes a nozzle member (56) that is profiled so as to act as the complementary mold member (30) and the matching profile is generated by moving the nozzle member (56) and the base molds (10) relative to each other while simultaneously applying the uncured wet sealant (28).

5. The method according to claim 3 or 4, wherein the sealant applicator (26) is stationary and the base molds (10) are moving.

6. The method according to any of the preceding claims, wherein in step d) the curing is accelerated by curing the uncured wet sealant (28) in a curing apparatus (36), preferably a curing oven or autoclave.

7. The method according to any of the preceding claims, wherein in step d) at least one base mold (10) is separated from its neighboring base mold (10) in order to limit the length of the cured sealant member (38), preferably before inserting the separated base mold (34) into the curing apparatus (36).

8. The method according to any of the preceding claims, wherein the method is performed in a continuous manner by performing the steps b) to e) in a cycle, whereby the respective base mold (10) emptied in step e) is arranged to form the continuous molding feature (16) in step b).

9. A method for manufacturing a protected structural profile part (50) of a fuselage (52) of an aircraft by performing the method according to any of the previous claims in order to obtain at least one cured sealant member (38) and by attaching the cured sealant member (38) to a structural profile part (14) so as to form a protective liner (48) and generate the protected structural profile part (50).

10. The method according to claim 9, wherein the cured sealant member (38) is attached by applying uncured wet sealant (44) and letting it cure.

11. A manufacturing apparatus configured for performing a method according to any of the preceding claims, the apparatus comprising:
- a plurality of base molds (10), wherein each base mold (10) includes a molding feature (12) that matches a portion to be protected of a structural profile part (14);
- a sealant application mechanism (24) that is configured for arranging the base molds (10) such that their molding features (12) cooperatively form a continuous molding feature (16) from a first base mold (18) to a last base mold (20) and for applying an uncured wet sealant (28) to the continuous molding feature (16);
- a curing apparatus (36) that is configured for curing the uncured wet sealant (28) into a cured sealant member (38) within the base mold (10); and
- a releasing mechanism configured for releasing the cured sealant member (38) from the base mold (10).

12. The apparatus according to claim 11, wherein the sealant application mechanism (24) comprises:
- a complementary mold member (30) that is configured to be applied to the uncured wet sealant (28) in order to generate a profile that matches the portion to be protected; and/or
- a sealant applicator (26) that is configured for injecting the uncured wet sealant (28) into the continuous molding feature (16), wherein the sealant applicator (26) and the base molds (10) are movable relative to each other.

13. The apparatus according to claim 12,
- wherein the sealant applicator (26) includes a nozzle member (56) that is profiled so as to act as the complementary mold member (30) and configured for generating the matching profile by moving the nozzle member (56) and the base molds (10) relative to each other while simultaneously applying the uncured wet sealant (28); and/or
- wherein the sealant applicator (26) is stationary and the base molds (10) are movable.

14. The apparatus according to any of the claims 11 to 13, the apparatus further comprising:
- a curing apparatus (36), preferably a curing oven or an autoclave, configured for curing the uncured wet sealant (28); and/or
- an automatic or manual transport device that is configured for transporting the base molds (10) between different stations of the manufacturing apparatus; and/or
- a second sealant applicator (46) that is configured for applying uncured wet sealant (44) so as to attach the cured sealant member (38) to the structural profile part (14) as a protective liner (48).

15. The apparatus according to claim 14,
- wherein the automatic transport device is configured to automatically separate at least one base mold (10) from its neighboring base mold (10) in order to limit the length of the cured sealant member (38), preferably before transporting and inserting the separated base mold (34) into the curing apparatus (36); and/or
- wherein the automatic transport device is configured so as to allow performance of the steps b) to e) in a cycle, whereby the respective base mold (10) emptied in step e) is arranged to form the continuous molding feature (16) in step b), in order to perform the manufacturing method in a continuous manner.

## Patentansprüche

1. Verfahren zum Herstellen von Schutzauskleidungen (48) für Strukturprofilteile (14) eines Rumpfes (52) eines Luftfahrzeugs, wobei das Verfahren Folgendes umfasst:
a) Vorbereiten mehrerer Basisformen (10), wobei jede Basisform (10) ein Formmerkmal (12) aufweist, das mit einem zu schützenden Abschnitt eines Strukturprofilteils (14) übereinstimmt;
b) Anordnen der Basisformen (10) derart, dass ihre Formmerkmale (12) zusammenwirkend ein kontinuierliches Formmerkmal (16) von einer ersten Basisform (18) zu einer letzten Basisform (20) bilden;
c) Aufbringen eines ungehärteten nassen Dichtmittels (28) auf das kontinuierliche Formmerkmal (16);
d) Aushärten des ungehärteten nassen Dichtmittels (28) zu einem gehärteten Dichtmittelelement (38) innerhalb der Basisform (10); und
e) Freigeben des ausgehärteten Dichtmittelelements (38) aus der Basisform (10).

2. Verfahren nach Anspruch 1, wobei in Schritt c) ein komplementäres Formelement (30), das zusammenwirkend einen Formhohlraum mit der Basisform (10) bildet, auf das ungehärtete nasse Dichtmittel (28) aufgebracht wird, um ein Profil zu erzeugen, das mit dem zu schützenden Abschnitt übereinstimmt.

3. Verfahren nach einem der vorhergehenden Ansprüche, wobei in Schritt c) das ungehärtete nasse Dichtmittel (28) durch Bewegen einer Dichtmittelaufbringvorrichtung (26) und der Basisformen (10) relativ zueinander und Einspritzen des ungehärteten nassen Dichtmittels (28) in das kontinuierliche Formmerkmal (16) aufgebracht wird.

4. Verfahren nach Anspruch 2 und 3, wobei die Dichtmittelaufbringvorrichtung (26) ein Düsenelement (56) aufweist, das so profiliert ist, dass es als das komplementäre Formelement (30) dient, und wobei das übereinstimmende Profil durch Bewegen des Düsenelements (56) und der Basisformen (10) relativ zueinander bei gleichzeitigem Aufbringen des ungehärteten nassen Dichtmittels (28) erzeugt wird.

5. Verfahren nach Anspruch 3 oder 4, wobei die Dichtmittelaufbringvorrichtung (26) stationär ist und sich die Basisformen (10) bewegen.

6. Verfahren nach einem der vorhergehenden Ansprüche, wobei in Schritt d) das Aushärten durch Aushärten des ungehärteten nassen Dichtmittels (28) in einer Aushärteeinrichtung (36), vorzugsweise einem Aushärteofen oder Autoklaven, beschleunigt wird.

7. Verfahren nach einem der vorhergehenden Ansprüche, wobei in Schritt d) mindestens eine Basisform (10) von ihrer benachbarten Basisform (10) getrennt wird, um die Länge des ausgehärteten Dichtmittelelements (38) zu begrenzen, vorzugsweise bevor die getrennte Basisform (34) in die Aushärteeinrichtung (36) eingesetzt wird.

8. Verfahren nach einem der vorhergehenden Ansprüche, wobei das Verfahren auf kontinuierliche Weise durch Durchführen der Schritte b) bis e) in einem Zyklus durchgeführt wird, wobei die jeweilige in Schritt e) entleerte Basisform (10) so angeordnet wird, dass das kontinuierliche Formmerkmal (16) in Schritt b) gebildet wird.

9. Verfahren zum Herstellen eines geschützten Strukturprofilteils (50) eines Rumpfes (52) eines Luftfahrzeugs durch Durchführen des Verfahrens nach einem der vorhergehenden Ansprüche, um mindestens ein ausgehärtetes Dichtmittelelement (38) zu erhalten, und durch Befestigen des ausgehärteten Dichtmittelelements (38) an einem Strukturprofilteil (14), um eine Schutzauskleidung (48) zu bilden und das geschützte Strukturprofilteil (50) zu erzeugen.

10. Verfahren nach Anspruch 9, wobei das ausgehärtete Dichtmittelelement (38) durch Aufbringen von ungehärtetem nassem Dichtmittel (44) und Aushärtenlassen desselben befestigt wird.

11. Herstellungseinrichtung, die zum Durchführen eines Verfahrens nach einem der vorhergehenden Ansprüche ausgelegt ist, wobei die Einrichtung Folgendes umfasst:
- mehrere Basisformen (10), wobei jede Basisform (10) ein Formmerkmal (12) aufweist, das mit einem zu schützenden Abschnitt eines Strukturprofilteils (14) übereinstimmt;
- einen Dichtmittelaufbringmechanismus (24), der zum Anordnen der Basisformen (10) derart, dass ihre Formmerkmale (12) zusammenwirkend ein kontinuierliches Formmerkmal (16) von einer ersten Basisform (18) zu einer letzten Basisform (20) bilden, und zum Aufbringen eines ungehärteten nassen Dichtmittels (28) auf das kontinuierliche Formmerkmal (16) ausgelegt ist;
- eine Aushärteeinrichtung (36), die zum Aushärten des ungehärteten nassen Dichtmittels (28) zu einem gehärteten Dichtmittelelement (38) innerhalb der Basisform (10) ausgelegt ist; und
- einen Freigabemechanismus, der zum Freigeben des ausgehärteten Dichtmittelelements (38) aus der Basisform (10) ausgelegt ist.

12. Einrichtung nach Anspruch 11, wobei der Dichtmittelaufbringmechanismus (24) Folgendes umfasst:
- ein komplementäres Formelement (30), das dazu ausgelegt ist, auf das ungehärtete nasse Dichtmittel (28) aufgebracht zu werden, um ein Profil zu erzeugen, das mit dem zu schützenden Abschnitt übereinstimmt; und/oder
- eine Dichtmittelaufbringvorrichtung (26), die zum Einspritzen des ungehärteten nassen Dichtmittels (28) in das kontinuierliche Formmerkmal (16) ausgelegt ist, wobei die Dichtmittelaufbringvorrichtung (26) und die Basisformen (10) relativ zueinander beweglich sind.

13. Einrichtung nach Anspruch 12,
- wobei die Dichtmittelaufbringvorrichtung (26) ein Düsenelement (56) aufweist, das so profiliert ist, dass es als das komplementäre Formelement (30) dient, und zum Erzeugen des übereinstimmenden Profils durch Bewegen des Düsenelements (56) und der Basisformen (10) relativ zueinander bei gleichzeitigem Aufbringen des ungehärteten nassen Dichtmittels (28) ausgelegt ist; und/oder
- wobei die Dichtmittelaufbringvorrichtung (26) stationär ist und die Basisformen (10) beweglich sind.

14. Einrichtung nach einem der Ansprüche 11 bis 13, wobei die Einrichtung ferner Folgendes umfasst:
- eine Aushärteeinrichtung (36), vorzugsweise einen Aushärteofen oder einen Autoklaven, der zum Aushärten des ungehärteten nassen Dichtmittels (28) ausgelegt ist; und/oder
- eine automatische oder manuelle Transportvorrichtung, die zum Transportieren der Basisformen (10) zwischen verschiedenen Stationen der Herstellungseinrichtung ausgelegt ist; und/oder
- eine zweite Dichtmittelaufbringvorrichtung (46), die zum Aufbringen von ungehärtetem nassem Dichtmittel (44), um das ausgehärtete Dichtmittelelement (38) als eine Schutzauskleidung (48) an dem Strukturprofilteil (14) zu befestigen, ausgelegt ist.

15. Einrichtung nach Anspruch 14,
- wobei die automatische Transportvorrichtung dazu ausgelegt ist, mindestens eine Basisform (10) automatisch von ihrer benachbarten Basisform (10) zu trennen, um die Länge des ausgehärteten Dichtmittelelements (38) zu begrenzen, vorzugsweise bevor die getrennte Basisform (34) in die Aushärteeinrichtung (36) transportiert und eingesetzt wird; und/oder
- wobei die automatische Transportvorrichtung dazu ausgelegt ist, eine Durchführung der Schritte b) bis e) in einem Zyklus zu ermöglichen, wobei die jeweilige in Schritt e) entleerte Basisform (10) so angeordnet wird, dass das kontinuierliche Formmerkmal (16) in Schritt b) gebildet wird, um das Herstellungsverfahren auf kontinuierliche Weise durchzuführen.

## Revendications

1. Procédé de fabrication de garnitures de protection (48) pour des profilés structurels (14) d'un fuselage (52) d'un aéronef, le procédé comprenant :
a) préparer une pluralité de moules de base (10), chaque moule de base (10) comportant un élément de moulage (12) qui correspond à une partie à protéger d'un profilé structurel (14) ;
b) disposer les moules de base (10) de sorte que leurs éléments de moulage (12) forment conjointement un élément de moulage continu (16) d'un premier moule de base (18) à un dernier moule de base (20) ;
c) appliquer un mastic d'étanchéité humide non durci (28) sur l'élément de moulage continu (16) ;
d) durcir le mastic d'étanchéité humide non durci (28) de façon à obtenir un élément d'étanchéité durci (38) à l'intérieur du moule de base (10) ; et
e) extraire l'élément d'étanchéité durci (38) du moule de base (10).

2. Procédé selon la revendication 1, dans lequel, dans l'étape c), un élément de moule complémentaire (30) qui forme une cavité de moulage conjointement avec le moule de base (10) est appliqué au mastic d'étanchéité humide non durci (28) afin de produire un profil qui correspond à la partie à protéger.

3. Procédé selon l'une quelconque des revendications précédentes, dans lequel, dans l'étape c), le mastic d'étanchéité humide non durci (28) est appliqué par un déplacement d'un applicateur de mastic d'étanchéité (26) et des moules de base (10) l'un par rapport aux autres et l'injection du mastic d'étanchéité humide non durci (28) dans l'élément de moulage continu (16).

4. Procédé selon les revendications 2 et 3, dans lequel l'applicateur de mastic d'étanchéité (26) comprend un élément formant buse (56) qui est profilé de manière à remplir la fonction de l'élément de moule complémentaire (30) et le profil correspondant est généré par un déplacement de l'élément formant buse (56) et des moules de base (10) l'un par rapport aux autres tout en appliquant simultanément le mastic d'étanchéité humide non durci (28).

5. Procédé selon la revendication 3 ou 4, dans lequel l'applicateur de mastic d'étanchéité (26) est stationnaire et les moules de base (10) sont en mouvement.

6. Procédé selon l'une quelconque des revendications précédentes, dans lequel, dans l'étape d), le durcissement est accéléré en durcissant le mastic d'étanchéité humide non durci (28) dans un appareil de durcissement (36), de préférence un four de durcissement ou un autoclave.

7. Procédé selon l'une quelconque des revendications précédentes, dans lequel, dans l'étape d), au moins un moule de base (10) est séparé de son moule de base (10) voisin afin de limiter la longueur de l'élément d'étanchéité durci (38), de préférence avant d'insérer le moule de base (34) séparé dans l'appareil de durcissement (36).

8. Procédé selon l'une quelconque des revendications précédentes, le procédé étant réalisé de manière continue en effectuant les étapes b) à e) en un cycle, le moule de base (10) respectif vidé à l'étape e) étant disposé pour former l'élément de moulage continu (16) à l'étape b).

9. Procédé de fabrication d'un profilé structurel protégé (50) d'un fuselage (52) d'un aéronef en exécutant le procédé selon l'une quelconque des revendications précédentes afin d'obtenir au moins un élément d'étanchéité durci (38) et en fixant l'élément d'étanchéité durci (38) à un profilé structurel (14) de manière à former une garniture de protection (48) et à produire le profilé structurel protégé (50).

10. Procédé selon la revendication 9, dans lequel l'élément d'étanchéité durci (38) est fixé en appliquant un mastic d'étanchéité humide non durci (44) et en le laissant durcir.

11. Appareil de fabrication configuré pour exécuter un procédé selon l'une quelconque des revendications précédentes, l'appareil comprenant :
- une pluralité de moules de base (10), chaque moule de base (10) comportant un élément de moulage (12) qui correspond à une partie à protéger d'un profilé structurel (14) ;
- un mécanisme d'application de mastic d'étanchéité (24) qui est configuré pour disposer les moules de base (10) de sorte que leurs éléments de moulage (12) forment conjointement un élément de moulage continu (16) d'un premier moule de base (18) à un dernier moule de base (20) et pour appliquer un mastic d'étanchéité humide non durci (28) sur l'élément de moulage continu (16) ;
- un appareil de durcissement (36) qui est configuré pour durcir le mastic d'étanchéité humide non durci (28) de façon à obtenir un élément d'étanchéité durci (38) à l'intérieur du moule de base (10) ; et
- un mécanisme d'extraction configuré pour extraire l'élément d'étanchéité durci (38) du moule de base (10).

12. Appareil selon la revendication 11, dans lequel le mécanisme d'application de mastic d'étanchéité (24) comprend :
- un élément de moule complémentaire (30) configuré pour être appliqué sur le mastic d'étanchéité humide non durci (28) afin de produire un profil qui correspond à la partie à protéger ; et/ou
- un applicateur de mastic d'étanchéité (26) configuré pour injecter le mastic d'étanchéité humide non durci (28) dans l'élément de moulage continu (16), l'applicateur de mastic d'étanchéité (26) et les moules de base (10) étant mobiles l'un par rapport aux autres.

13. Appareil selon la revendication 12,
- dans lequel l'applicateur de mastic d'étanchéité (26) comprend un élément formant buse (56) qui est profilé de manière à remplir la fonction de l'élément de moule complémentaire (30) et est configuré pour produire le profil correspondant par un déplacement de l'élément formant buse (56) et des moules de base (10) l'un par rapport aux autres tout en appliquant simultanément le mastic d'étanchéité humide non durci (28) ; et/ou
- dans lequel l'applicateur de mastic d'étanchéité (26) est stationnaire et les moules de base (10) sont mobiles.

14. Appareil selon l'une quelconque des revendications 11 à 13, l'appareil comprenant en outre :
- un appareil de durcissement (36), de préférence un four de durcissement ou un autoclave, configuré pour durcir le mastic d'étanchéité humide non durci (28) ; et/ou
- un dispositif de transport automatique ou manuel configuré pour transporter les moules de base (10) entre différents postes de l'appareil de fabrication ; et/ou
- un second applicateur de mastic d'étanchéité (46) configuré pour appliquer du mastic d'étanchéité humide non durci (44) de manière à fixer l'élément d'étanchéité durci (38) au profilé structurel (14) de sorte qu'il constitue une garniture de protection (48).

15. Appareil selon la revendication 14,
- dans lequel le dispositif de transport automatique est configuré pour séparer automatiquement au moins un moule de base (10) de son moule de base (10) voisin afin de limiter la longueur de l'élément d'étanchéité durci (38), de préférence avant de transporter et d'insérer le moule de base (34) séparé dans l'appareil de durcissement (36) ; et/ou
- dans lequel le dispositif de transport automatique est configuré pour permettre l'exécution des étapes b) à e) en un cycle, le moule de base (10) respectif vidé à l'étape e) étant disposé pour former l'élément de moulage continu (16) à l'étape b), afin d'exécuter le procédé de fabrication de façon continue.
